Europäisches Patentamt

European Patent Office

Office européen des brevets

(11) Veröffentlichungsnummer: **0 137 530**
A1

(12) **EUROPÄISCHE PATENTANMELDUNG**

(21) Anmeldenummer: **84201169.4**

(22) Anmeldetag: **14.08.84**

(51) Int. Cl.⁴: **G 02 B 3/00**
G 02 B 6/22, C 03 C 17/02

(30) Priorität: **16.08.83 DE 3329512**

(43) Veröffentlichungstag der Anmeldung:
**17.04.85 Patentblatt 85/16**

(84) Benannte Vertragsstaaten:
**DE FR GB**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB**

(72) Erfinder: **Böhm, Heinz, Dipl.-Phys.**
**Kneippstrasse 2**
**D-8520 Erlangen(DE)**

(74) Vertreter: **Peuckert, Hermann et al,**
**Philips Patentverwaltung GmbH Billstrasse 80 Postfach**
**10 51 49**
**D-2000 Hamburg 28(DE)**

(54) **Stablinse aus mehreren Glasschichten.**

(57) Ein in weiten Grenzen einstellbarer Brechungsindexverlauf läßt sich bei Stablinsen auswählen, die aus zwei durch ihre Längsachse gehende Hälften (1, 2) gebildet und bei der die Glasschichten (5-10) von außen nach innen übereinander gelegt sind. Der Brechungsindexverlauf ergibt sich aus der Reihenfolge der nach Brechungsindex ausgewählten und aus der Dampfphase aufgedampften einzelnen Schichten.

FIG.1

EP 0 137 530 A1

Philips Patentverwaltung GmbH  PHD 83318 EP

N.V. Philips'Gloeilampenfabrieken  28.06.1984

— 1 —

## Stablinse aus mehreren Glasschichten

Die Erfindung betrifft eine Stablinse aus mehreren, sich im Brechungsindex und/oder der Dicke unterscheidenden Glasschichten, die konzentrisch um die Längsachse angeordnet sind. Solche Stablinsen werden in Systemen der optischen Nachrichtentechnik eingesetzt.

Bisher wurden Stablinsen aus Glasstäben geschnitten, deren parabolischer Brechungsindexverlauf durch ein Ionenaustauschverfahren eingestellt wird. Ein Mangel dieses Verfahrens, der sich unmittelbar auf die danach hergestellte Produkte auswirkt, ist, daß zu verschiedenen Zeiten verschiedene Brechungsindexverläufe entstehen. Deshalb müssen dann nach dem Verfahren hergestellte Stablinsen auf ihre optische Länge kontrolliert und gegebenenfalls nachgekürzt werden. Stablinsen gleicher optischer Eigenschaften können unterschiedliche Längen haben, die weiter Probleme beim Zusammenstellen von optischen Systemen aus Stablinsen zur Folge haben.

Der Erfindung liegt die Aufgabe zugrunde, möglichst einfach herstellbare Stablinsen gleicher Qualität und Länge anzugeben.

Diese Aufgabe wird bei einer Stablinse der eingangs genannten Art dadurch gelöst, daß in einer durch die Längsachse gehenden Ebene zwei Hälften zu einer Stablinse vereinigt sind, daß die Hälften aus vielen einzelnen übereinander aufgebrachten Schichten bestehen, deren letzte Schicht die Längsachse enthält und daß die Hälften an der Vereinigungsebene geschliffen und poliert sind.

Vorteilhaft läßt sich hierbei das für andere Linsenarten bekannte CVD-Verfahren anwenden (europäische Patentanmeldung 0 017 296). Besonders vorteilhafte Ausgestaltungen der Erfindung ergeben sich durch stufenförmige Annäherung eines beliebig vorgebbaren Brechungsindexverlaufes, mit dem sich die optischen Eigenschaften von Stablinsen in weiten Grenzen verändern lassen.

Die Erfindung wird mit weiteren Ausgestaltungen anhand der in der Zeichnung schematisch dargestellten Ausführungsbeispiele näher erläutert und beschrieben.

Es zeigen:

Figur 1 In perspektivischer Ansicht zwei nach Art einer Explosionsdarstellung auseinandergerückte Hälften einer Stablinse.

Figur 2 Im Schnitt verschiedene Stadien der Herstellung einer Hälfte einer Stablinse

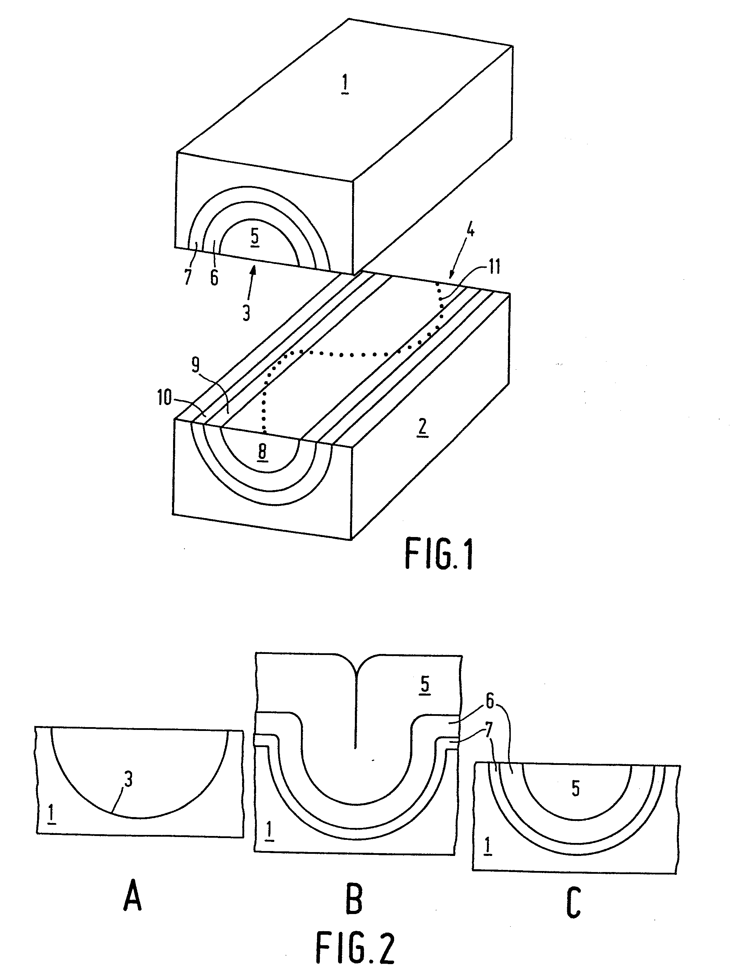

Die in Figur 1 explosionsartig dargestellte Stablinse setzt sich aus quaderförmigen Blöcken 1 und 2 zusammen. In den halbzylinderförmigen Mulden 3 und 4 befinden sich konzentrisch übereinanderliegende Schichten 5 - 7 und 8 - 10, die aus Glas verschiedener Brechungsindexes bestehen.

Die beiden Hälften 1 und 2 werden beispielsweise mittels Klebstoffes zusammengefügt und leiten dann einen Lichtstrahl entlang der gepunktet gezeichneten Linie 11.

Die aus Gründen des besseren Verständnisses gezeichneten drei Schichten in den Mulden jeder Hälfte werden bei einem praktischen Ausführungsbeispiel durch eine Vielzahl von Schichten ergänzt, durch deren Stufung ein beliebig vorwählbarer Brechungsindexverlauf nachvollziehbar ist. Durch geeignete Schichtenauswahl ist dadurch beispielsweise auch ein hyperbolischer oder ein alternierender Brechungsindexverlauf herstellbar.

Die optischen Eigenschaften sind ferner unabhängig von dem Umrissen einer solchen Stablinse, die beispielsweise eine im Querschnitt quadratische Form hat, wenn die jeweiligen Hälften aus Glasplatten geeigneter Dicke herausgeschnitten werden. Die äußere Gestalt solcher Stablinsen richtet sich nach den Gegebenheiten ihrer Befestigungsmittel und kann ohne besonderen Aufwand verändert werden. Mit rechteckigen Außenmaßen lassen sich vorteilhaft Stablinsen besonders einfach gruppenweise zusammenfügen.

In Figur 2 sind drei Stadien der Herstellung von Stablinsenhälften dargestellt. Dabei zeigt Teil A im Schnitt einen Ausschnitt einer mit einer Mulde 3 versehenen Glasplatte 1. Im Teil B sind auf der Oberfläche der Glasplatte 1 die Schichten 5 - 7 aufgedampft worden (CVD = CHEMIKAL-VAPOR DEPOSITION).

Die Oberfläche einer derart bedampften Glasplatte wird nach dem Aufdampfen wieder auf ihren ursprünglichen Wert reduziert, so daß nur noch die in der Mulde 3 verbliebenen Schichten 5 - 7 vorhanden sind. Zum Herstellen einer Stablinse werden zwei spiegelbildlich gleichartige Teile der Figur 2 C aus der Glasplatte herausgeschnitten und wie anhand Figur 1 beschrieben zusammengefügt.

Philips Patentverwaltung GmbH          PHD 83318 EP
N.V. Philips'Gloeilampenfabrieken      29.06.1984

Patentansprüche

1. Stablinse aus mehreren, sich in Brechungsindex und/oder der Dicke unterscheidenden Glasschichten, die konzentrisch um die Längsachse angeordnet sind, dadurch gekennzeichnet, daß in einer durch die Längsachse gehenden Ebene zwei Hälften (1, 2) zu einer Stablinse vereinigt sind, daß die Hälften aus vielen einzelnen übereinander aufgebrachten Schichten (5 - 10) bestehen, deren letzte Schicht die Längsachse enthält und daß die Hälften an der Vereinigungsebene geschliffen und poliert sind.

2. Stablinse nach Anspruch 1, dadurch gekennzeichnet, daß die beiden Hälften (1, 2) an der Verbindungsschicht miteinander verschmolzen sind.

3. Stablinse nach Anspruch 1, dadurch gekennzeichnet, daß die beiden Hälften (1, 2) an der Verbindungsschicht miteinander verklebt sind.

4. Stablinse nach einem der vorhergehenden Ansprüche, dadurch gekennzeichnet, daß die Hälften (1, 2) als rechteckige Blöcke geschnitten sind.

5. Stablinse nach einem der vorhergehenden Ansprüche, dadurch gekennzeichnet, daß Schichten hoher

- 6 -

und niedriger Brechungsindizes alternierend abgeschieden worden sind.

0137530

FIG.1

A          B          C

FIG.2

PHD 83-318

## EUROPÄISCHER RECHERCHENBERICHT

Nummer der Anmeldung

EP 84 20 1169

Europäisches Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 052 901 (PHILIPS GLOEILAMPENFABRIEKEN) <br> * Anspruch 1; Figuren 5-8 * | 1 | G 02 B 3/00 <br> G 02 B 6/22 <br> C 03 C 17/02 |
| | --- | | |
| Y | US-A-3 718 383 (R.S. MOORE) <br> * Spalte 1, Zeilen 22-27 * | 1 | |
| | --- | | |
| A | EP-A-0 017 296 (PHILIPS PATENTVERWALTUNG GMBH) <br> * Ansprüche 1-4,6 * | 1 | |
| | --- | | |
| P,A | EP-A-0 089 498 (SIEMENS AG) <br> * Figur 1 * | 1 | |
| | --- | | |
| A | GB-A-1 440 178 (SIEMENS AG) <br> * Anspruch 1 * | 1 | RECHERCHIERTE SACHGEBIETE (Int. Cl.4) |
| | --- | | |
| A | DE-A-2 630 208 (NORTHERN TELECOM LTD.) <br> * Anspruch 1 * | 5 | G 02 B 3/00 <br> G 02 B 6/12 <br> G 02 B 6/22 <br> C 03 C 17/02 <br> C 03 C 17/34 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 28-11-1984 | FUCHS R |